# EUROPÄISCHE PATENTSCHRIFT

(11) **EP 0 935 761 B1**
(45) Veröffentlichungstag und Bekanntmachung des Hinweises auf die Patenterteilung: **04.04.2001**
(21) Anmeldenummer: 97904988.9
(22) Anmeldetag: 09.01.1997
(51) Int. Cl.: G01S 7/03

(54) **RADARSENSOR FÜR DEN EINSATZ IN KRAFTFAHRZEUGEN**
RADAR SENSOR FOR USE IN MOTOR VEHICLES
CAPTEUR RADAR A UTILISER SUR DES VEHICULES A MOTEUR

(30) Priorität: 11.06.1996 DE 19623196
(43) Veröffentlichungstag der Anmeldung: 18.08.1999
(73) Patentinhaber: ROBERT BOSCH GMBH, 70442 Stuttgart (DE)
(72) Erfinder: WAGNER, Klaus-Peter, D-70193 Stuttgart (DE)
(86) Internationale Anmeldenummer: DE9700018
(87) Internationale Veröffentlichungsnummer: WO9747988

(56) Entgegenhaltungen:
- EP-A- 0 517 977
- DE-A- 4 412 770

## Beschreibung

### Stand der Technik

Die vorliegende Erfindung betrifft einen Radarsensor für den Einsatz in Kraftfahrzeugen, welcher mindestens ein Antennenelement zum Aussenden von Radarstrahlen und örtlich getrennt davon mindestens ein Antennenelement zum Empfangen der an einem oder mehreren Objekten reflektierten Radarstrahlen aufweist.

Radarsensoren können in Kraftfahrzeugen bevorzugt zur Messung von Abständen und Relativgeschwindigkeiten zwischen aufeinanderfolgenden Fahrzeugen eingesetzt werden. Ein solches Abstandsradarsystem wird in der Literatur üblicherweise als Autonomous/Intelligent Cruise Control (AICC/ICC) oder Adaptive Cruise Control (ACC) bezeichnet. Das System erzeugt entweder ein Kollisionswarnsignal oder wirkt automatisch steuernd auf die Bremse oder den Fahrzeugantrieb des Kraftfahrzeugs ein, falls ein minimal zulässiger Abstand zwischen einem vorausfahrenden Fahrzeug unterschritten wird.

In der EP 0 568 427 A1 ist ein Radarsensor beschrieben, bei dem mehrere Sende-Antennenelemente und mehrere Empfangs-Antennenelemente getrennt voneinander angeordnet sind. Die Sende-Antennenelemente erzeugen ein mehrstrahliges Sendediagramm, und eine Reihe von vor den Sende-Antennenelementen installierten Empfangs-Antennenelementen empfängt die an ein oder mehreren Objekten reflektierten Radarstrahlen (Radarechos). Dabei sind die Empfangs-Antennenelemente im Abstrahlbereich der Sende-Antennenelemente angeordnet und in dieselbe Richtung orientiert wie diese. Wenn aus Gründen einer Aufwandsminimierung sowohl der Radar-Sender als auch der-Empfänger von demselben Oszillator gespeist werden sollen, werden bei der bekannten Antennenanordnung relativ lange Hochfrequenzleitungen erforderlich, weil die Ausgänge der Empfangs-Antennenelemente über lange Umwegleitungen zu einem gemeinsamen, nahe den Eingängen der Sende-Antennenelemente angeordneten Oszillator geführt werden müßten. Lange Leitungen haben aber den Nachteil, daß sie relativ hohe Verluste erzeugen.

Bei einem aus der DE-A-44 12 770 bekannten Radarsensor für Kraftfahrzeuge sind mehrere Empfangs-Antennenelemente außerhalb des Strahlungsdiagramms eines Sende-Antennenelements angeordnet. Dabei sind die Empfangs- und Sende-Antennenelemente in einer Ebene nebeneinander angeordnet und, wie beim zuvor dargelegten Stand der Technik, in dieselbe Richtung orientiert. Deshalb tritt auch hier der Nachteil auf ,daß lange Leitungen zum Anschluß aller Antennenelemente an einen gemeinsamen Oszillator erforderlich sind.

Der Erfindung liegt daher die Aufgabe zugrunde, einen Radarsensor der eingangs genannten Art anzugeben, bei dem möglichst kurze Leitungen erforderlich sind, um sowohl die Sende-Antennenelemente mit dem Trägersignal eines Oszillators zu speisen, als auch mit demselben Oszillator-Trägersignal die Ausgangssignale der Empfangs-Antennenelemente zu demodulieren.

### Vorteile der Erfindung

Erfindungsgemäß wird die Aufgabe mit den Merkmalen des Anspruchs 1 dadurch gelöst, daß mindestens ein Empfangs-Antennenelement außerhalb des Strahlungsdiagramms mindestens eines Sende-Antennenelements angeordnet ist, wobei das Sende- und das Empfangs-Antenenelement in unterschiedlichen Richtungen orientiert sind, und daß Mittel vorgesehen sind, welche die reflektierten Radarstrahlen auf das Empfangs-Antennenelement und/oder die von dem Sende-Antennenelement ausgehenden Radarstrahlen in eine gewünschte Richtung umlenken. Mit dieser Anordnung der Sende- und Empfangs-Antennenelemente benötigt man nur sehr kurze Verbindungsleitungen zu einem gemeinsamen Oszillator. Durch die Trennung von Sende- und Empfangs-Antennenelementen kann man den Einsatz von verlustbehafteten Bauelementen (z. B. Zirkulatoren, Ringhybride) umgehen, welche bei Radarsensoren mit Antennen, die sowohl Sende- als auch Empfangsfunktion haben, Sendesignale von Empfangssignalen trennen.

Gemäß den Unteransprüchen ist es zweckmäßig, die Empfangs-Antennenelemente orthogonal zu den Sende-Antennenelementen auszurichten und einen Umlenkspiegel vorzusehen, der die reflektierten Radarstrahlen auf das mindestens eine Empfangs-Antennenelement umlenkt. Für den Empfang der reflektierten Radarstrahlen (Radarechos) ist der Einsatz von mindestens drei Empfangs-Antennenelementen vorteilhaft. Auch ist es zweckmäßig eine oder mehrere quasioptische Linsen zur Bündelung der ausgesendeten und der reflektierten Radarstrahlen vorzusehen. In einer konkreten Ausführung können zwei quasioptische Linsen in einer Ebene nebeneinander angeordnet sein, wobei in der Brennebene einer der beiden Linsen das mindestens eine Sende-Antennenelement angeordnet ist und der Umlenkspiegel so zur Brennebene der anderen quasioptischen Linse ausgerichtet ist, daß er die von dieser Linse gebündelten reflektierten Radarstrahlen auf das mindestens eine Empfangs-Antennenelement umlenkt.

### Beschreibung eines Ausführungsbeispiels

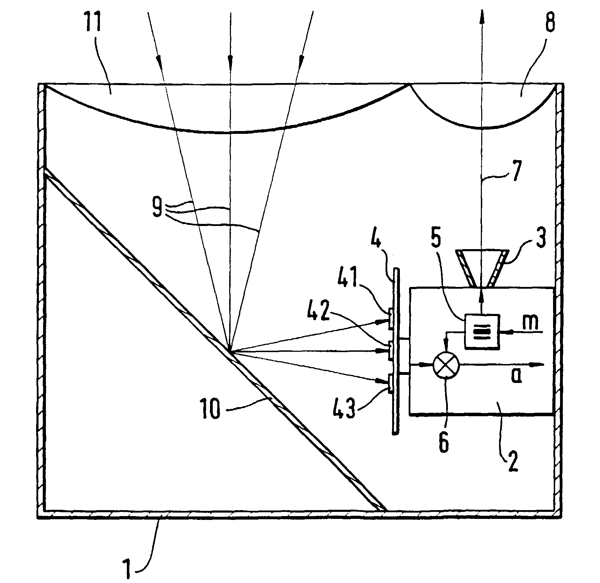

Anhand eines in der Zeichnung dargestellten Ausführungsbeispiels wird nachfolgend die Erfindung näher erläutert.

Die in der Zeichnung dargestellte Anordnung zeigt einen Radarsensor, wie er beispielsweise als Abstandsradargerät in einem Kraftfahrzeug eingesetzt werden kann. Der gesamte Radarsensor ist in einem kompakten Gehäuse 1 untergebracht. In diesem Gehäuse 1 befindet sich eine Mikrowellenschaltung 2, die eine vorzugsweise in planarer Leitungstechnik ausgeführte Sende- und Empfangsschaltung ist. Diese Mikrowellenschaltung 2 ist einerseits mit einer Sendeantenne 3 und andererseits mit einer Empfangsantenne 4 gekoppelt. Die Mikrowellenschaltung 2 könnte auch in einem eigenen Gehäuse, getrennt von den Antennen, untergebracht sein.

In dem dargestellten Ausführungsbeispiel ist ein einziges Sende-Antennenelement 3, z. B. in Form eines Hornstrahlers, vorgesehen. Die Empfangsantenne 4 besteht in dem dargestellten Ausführungsbeispiel aus drei planaren Antennenelementen 41, 42 und 43. Abweichend von dem der Zeichnung zu entnehmenden Ausführungsbeispiel können auf der Sendeseite auch mehrere Antennenelemente und auf der Empfangsseite auch weniger oder mehr als drei Antennenelemente vorgesehen werden. Außerdem können die Sende- und/oder Empfangs-Antennenelemente als Hörner oder planare Antennenstrukturen oder als dielektrische Stielstrahler ausgeführt sein.

Die Mikrowellenschaltung enthält im wesentlichen einen Oszillator 5, vorzugsweise einen Gunn-Oszillator, und einen Mischer 6 für jedes der vorhandenen Empfangs-Antennenelemente 41, 42, 43 (in der Zeichnung ist symbolisch nur ein Mischer dargestellt), der mit der Trägerfrequenz des Oszillators 5 das Ausgangssignal des zugehörigen Antennenelementes 41, 42, 43 in ein Zwischenfrequenzsignal a heruntermischt. Die Mikrowellenschaltung 2 kann auch weitere Schaltungselemente zur Signalverarbeitung des Zwischenfrequenzsignals a enthalten. Auf nähere Schaltungsdetails wird hier aber nicht eingegangen, da sie nicht Gegenstand der Erfindung sind. Der Oszillator 5 dient nicht nur zur Modulation der empfangenen reflektierten Radarstrahlen, sondern zusätzlich auch als Sendesignalquelle. Ein Eingangssignal m für den Oszillator 5 deutet an, daß das vom Oszillator 5 erzeugte Trägersignal modulierbar ist.

In der Zeichnung ist dargestellt, daß das Sende-Antennenelement 3 örtlich getrennt von den Empfangs-Antennenelementen 41, 42, 43 angeordnet ist; und zwar sind die Empfangs-Antennenelemente 41, 42, 43 außerhalb des Strahlenganges der gesendeten Radarstrahlen seitlich neben dem Sende-Antennenelement 3 installiert. Dadurch, daß das Sende-Antennenelement 3 und die Empfangs-Antennenelemente 41, 42, 43 in unterschiedliche Richtungen, vorzugsweise orthogonal zueinander, ausgerichtet sind, können die Verbindungsleitung vom gemeinsamen Oszillator 5 zum Eingang des Sende-Antennenelements 3 und die Verbindungsleitungen von den Ausgängen der Empfangs-Antennenelemente 41, 42, 43 zu dem von dem gemeinsamen Oszillator 5 angesteuerten Mischer 6 extrem kurz gehalten werden. Wegen der kurzen Leitungen können die Verluste in der Mikrowellenschaltung 2 gering gehalten werden.

Gemäß dem Ausführungsbeispiel ist das Sende-Antennenelement 3 so ausgerichtet, daß die Radarstrahlen 7 direkt ohne Umlenkung ausgestrahlt werden. Eine quasioptische Linse 8, in deren Brennpunkt das Sende-Antennenelement 3 angeordnet ist, bewirkt eine geeignete Bündelung der ausgesendeten Radarstrahlen 7. Da die Empfangs-Antennenelemente 41, 42, 43 nicht in Einfallsrichtung der reflektierten Radarstrahlen 9 orientiert sind, ist im Gehäuse 1 ein Umlenkspiegel 10 installiert, der dafür sorgt, daß die Radarechos 9 möglichst vollständig auf die Empfangs-Antennenelemente 41, 42, 43 umgelenkt werden. Eine zweite quasioptische Linse 11 bündelt die Radarechos 9 auf den Umlenkspiegel 10. Durch geeignete Formung (z. B. eben, konvex, konkav) des Umlenkspiegels 10 kann die Umlenkung der von der Linse 11 aufgenommenen Radarechos auf die Empfangs-Antennenelemente 41, 42, 43 optimiert werden. Der Umlenkspiegel 10 kann in einer Ecke des Gehäuses 1 stabil fixiert werden.

Es ist auch eine örtliche Vertauschung zwischen der Empfangs-Antenne 4 und der Sende-Antenne 3 möglich. Bei einer anderen als der gezeigten Anordnung der Sende-Antenne 3 und der Empfangs-Antenne 4 sind evtl. zusätzlich Umlenkspiegel erforderlich.

## Patentansprüche

1. Radarsensor für den Einsatz in Kraftfahrzeugen, welcher mindestens ein Antennenelement zum Aussenden von Radarstrahlen und örtlich getrennt davon mindestens ein Antennenelement zum Empfangen der aus einem oder mehreren Objekten reflektierten Radarstrahlen aufweist, dadurch gekennzeichnet, daß das mindestens eine Empfangs-Antennenelement (41, 42, 43) außerhalb des Strahlungsdiagramms (7) des mindestens einen Sende-Antennenelements (3) angeordnet ist, wobei das Sende-(3) und das Empfangs-Antennenelement (41, 42, 43) in unterschiedliche Richtungen orientiert sind, und daß Mittel (10) vorgesehen sind, welche die reflektierten Radarstrahlen (9) auf das Empfangs-Antennenelement (41, 42, 43) und/oder die von dem Sende-Antennenelement (3) ausgehenden Radarstrahlen (7) in eine gewünschte Richtung umlenken.

2. Radarsensor nach Anspruch 1, dadurch gekennzeichnet, daß das mindestens eine Empfangs-Antennenelement (41, 42, 43) orthogonal zu dem mindestens einen Sende-Antennenelement (3), welches direkt in die gewünschte Abstrahlrichtung ausgerichtet ist, angeordnet ist und daß ein Umlenkspiegel (10) die reflektierten Radarstrahlen (9) auf das mindestens eine Empfangs-Antennenelement (41, 42, 43) umlenkt.

3. Radarsensor nach Anspruch 1 oder 2, dadurch gekennzeichnet, daß ein oder mehrere quasioptische Linsen (8, 11) zur Bündelung der ausgesendeten und reflektierten Radarstrahlen (7, 9) vorgesehen sind.

4. Radarsensor nach Anspruch 1 oder 2, dadurch gekennzeichnet, daß für das Aussenden der Radarstrahlen (7) ein Sende-Antennenelement (3) und für den Empfang der reflektierten Radarstrahlen (9) mindestens drei Empfangs-Antennenelemente (41, 42, 43) vorgesehen sind.

5. Radarsensor nach einem der vorhergehenden Ansprüche, dadurch gekennzeichnet, daß zwei quasioptische Linsen (8, 11) in einer Ebene nebeneinander angeordnet sind, daß in der Brennebene einer (8) der beiden Linsen (8, 11) das mindestens eine Sende-Antennenelement (3) angeordnet ist und daß der Umlenkspiegel (10) so zur Brennebene der anderen quasioptischen Linse (11) ausgerichtet ist, daß er die von dieser Linse (11) gebündelten, reflektierten Radarstrahlen auf das mindestens eine Empfangs-Antennenelement (41, 42, 43) umlenkt.

## Claims

1. Radar sensor for use in motor vehicles, which has at least one antenna element for emitting radar beams and, spatially separated therefrom, at least one antenna element for receiving the radar beams reflected from one or more objects, characterized in that the at least one receiving antenna element (41, 42, 43) is arranged outside the radiation pattern (7) of the at least one transmitting antenna element (3), the transmitting antenna element (3) and the receiving antenna element (41, 42, 43) being orientated in different directions, and in that means (10) are provided which deflect the reflected radar beams (9) on to the receiving antenna element (41, 42, 43) and/or deflect the radar beams (7) emanating from the transmitting antenna element (3) into a desired direction.

2. Radar sensor according to Claim 1, characterized in that the at least one receiving antenna element (41, 42, 43) is arranged orthogonal to the at least one transmitting antenna element (3), which is aligned directly in the desired direction of emission, and in that a deflecting mirror (10) deflects the reflected radar beams (9) onto the at least one receiving antenna element (41, 42, 43).

3. Radar sensor according to Claim 1 or 2, characterized in that one or more quasi-optical lenses (8, 11) are provided for focusing the emitted and reflected radar beams (7, 9).

4. Radar sensor according to Claim 1 or 2, characterized in that a transmitting antenna element (3) is provided for emitting the radar beams (7), and at least three receiving antenna elements (41, 42, 43) are provided for receiving the reflected radar beams (9) .

5. Radar sensor according to one of the preceding claims, characterized in that two quasi-optical lenses (8, 11) are arranged next to one another in a plane, in that the at least one transmitting antenna element (3) is arranged in the focal plane of one (8) of the two lenses (8, 11), and in that the deflecting mirror (10) is aligned relative to the focal plane of the other quasi-optical lens (11) such that it deflects the reflected radar beams focused by this lens (11) onto the at least one receiving antenna element (41, 42, 43) .

## Revendications

1. Capteur radar applicable à des véhicules automobiles, comportant au moins un élément d'antenne pour l'émission de faisceaux radars et au moins un élément d'antenne de réception, séparé géographiquement du précédent, pour recevoir les faisceaux radars réfléchis par un ou plusieurs objets,
caractérisé en ce qu'
au moins un élément d'antenne de réception (41, 42, 43) est prévu en dehors du diagramme de rayonnement (7) d'au moins un élément d'antenne d'émission (3),
l'élément d'antenne d'émission (3) et l'élément d'antenne de réception (41, 42, 43) étant orientés dans des directions différentes, et
des moyens (10) dévient les faisceaux radars réfléchis (9) vers l'élément d'antenne de réception (41, 42, 43) et/ou les faisceaux radars (7) émis par l'élément d'antenne d'émission (3) vers une direction souhaitée.

2. Capteur radar selon la revendication 1,
caractérisé en ce qu'
au moins un élément d'antenne de réception (41, 42, 43) est dirigé orthogonalement par rapport à au moins un élément d'antenne d'émission (3) dirigé directement dans la direction d'émission souhaitée, et
un miroir de renvoi (10) dévie les faisceaux radars réfléchis (9) sur au moins un élément d'antenne de réception (41, 42, 43).

3. Capteur radar selon la revendication 1 ou 2,
caractérisé en ce qu'
une ou plusieurs lentilles quasi optiques (8, 11) regroupent les faisceaux radars émis et réfléchis (7, 9).

4. Capteur radar selon la revendication 1 ou 2,
caractérisé par
un élément d'antenne d'émission (3) pour émettre les faisceaux radars (7) et au moins trois éléments d'antenne de réception (41, 42, 43) pour recevoir les faisceaux radars réfléchis (9).

5. Capteur radar selon l'une des revendications précédentes,
caractérisé en ce que
deux lentilles quasi optiques (8, 11) sont juxtaposées dans un plan, et
dans le plan focal de l'une (8) des deux lentilles (8, 11), se trouve au moins un élément d'antenne d'émission (3), et le miroir de renvoi (10) est aligné vers le plan focal de l'autre lentille quasi optique (11), pour
dévier les faisceaux radars réfléchis, regroupés par l'autre lentille (11) vers au moins un élément d'antenne de réception (41, 42, 43).
